# EUROPEAN PATENT SPECIFICATION

(11) **EP 0 670 791 B1**
(45) Date of publication and mention of the grant of the patent: **26.02.1997**
(21) Application number: 92923639.6
(22) Date of filing: 01.12.1992
(51) Int. Cl.: B60R 13/01, B60R 7/02

(54) **VEHICLE LUGGAGE COMPARTMENT LINER**
LADERAUMSCHUTZEINLAGE FÜR EIN KRAFTFAHRZEUG
CAISSE DE PROTECTION ET DE RANGEMENT POUR COFFRE A BAGAGES DE VEHICULE

(43) Date of publication of application: 13.09.1995
(73) Proprietor: Neocon International Inc., Halifax, Nova Scotia B3S 1B9 (CA)
(72) Inventor: RYAN, Patrick T., Windsor Junction, Nova Scotia B0N 2V0 (CA)
(74) Representative: Asquith, Anthony
(86) International application number: CA9200516
(87) International publication number: WO9412370

(56) References cited:
- US-A- 5 025 964
- US-A- 5 044 682
- US-A- 5 054 668
- US-A- 5 167 433

## Description

### TECHNICAL FIELD

This invention relates to a liner for the luggage compartment of a vehicle according to the preamble of claim 1.

### BACKGROUND ART

Historically, vehicle luggage compartment areas such as automobile trunks (or "boots", as they may be referred to in some countries), have been lacking in several respects for the user. Firstly, dirt and spills are difficult to clean up because there is often poor accessibility to the luggage compartment area, particularly in the case of automobile trunks, making cleaning efforts awkward. Corrosive and grimy substances stain and even damage the luggage compartment carpeting and flooring.

Secondly, there is a desire and need to utilize luggage compartments to carry corrosive and grimy substances and like, but there is a reluctance to do so because of the negative results.

Thirdly, luggage compartment areas commonly have poor storage and organization capability, and the present invention addresses that problem as well.

A liner according to the preamble of claim 1 is known from e.g. US-A-5 025 964.

### DISCLOSURE OF INVENTION

It is an object of the invention to provide a liner for use in vehicle luggage compartments. The liner is offered as a means of enabling users to broaden luggage compartment usage without fear of damage to the luggage compartment area and with the knowledge that virtually any resulting mess can be cleaned up in minutes. The liner also improves storage capability.

In the invention, therefore, a plastic liner is provided for use in a vehicle luggage compartment. The liner has a bottom conforming generally to the shape of the luggage compartment floor, and integral rear, side and front walls, at least some of which generally conform to walls of the luggage compartment. Dividers are provided, including at least one long reinforced divider between opposite walls of the liner, and optionally at least one short divider between the long divider and another wall. The long divider is reinforced, for example by a rib or ribs, for greater rigidity and strength, and preferably is supported at opposite ends by grooves in the walls of the liner. The reinforcement is preferably on the side of the long divider opposite the short divider(s), and is preferably continuous along the long divider.

Preferably, each short divider has a vertical slot at one end thereof defining a hook portion adapted to hook over the long divider. The hook portion preferably extends downwardly far enough to overlie at least one of the ribs of the long divider in a friction fit.

The liner can be adapted to the luggage compartment of virtually any vehicle, including but not limited to automobile trunks, station wagon rear compartments, and van, minivan or "4x4" luggage areas.

Further features of the invention will be described or will become apparent in the course of the following detailed description.

Throughout this description, in the interest of consistency and certainty, "front" is with reference to the front of the vehicle, and "rear" or "back" is with reference to the rear of the vehicle. Thus, for example, the rear of an automobile trunk or of the liner is intended to mean the portion nearest the rear of the automobile.

### BRIEF DESCRIPTION OF DRAWINGS

In order that the invention may be more clearly understood, the preferred and alternative embodiments thereof will now be described in detail by way of example, with reference to the accompanying drawings, in which:
Fig. 1 is a perspective view showing one embodiment of the invention, with dividers at the front;
Fig. 2 is an exploded perspective view of the Fig. 1 embodiment;
Fig. 3 is a perspective showing another embodiment of the invention, with dividers at the back;
Fig. 4 is a perspective showing another embodiment of the invention, with dividers along one side;
Fig. 5 is a perspective showing another embodiment of the invention, with dividers at the front and back;
Fig. 6 is a perspective view showing a liner (without dividers) in the trunk of an automobile;
Fig. 7 is a corresponding side sectional view;
Fig. 8 is a side sectional view showing the liner partially inserted in the trunk;
Fig. 9 is a view of the liner wall showing the preferred groove arrangement for receiving a long divider;
Fig. 10 is a view of the liner wall showing the preferred groove arrangement for receiving a short divider;
Fig. 11 is a sectional view showing the engagement between a short divider and the liner wall;
Fig. 12 is a sectional view showing the installation of a short divider to engage a long divider;
Fig. 13 is a view corresponding to Fig. 12, with the dividers fully engaged; and
Fig. 14 is a perspective of an alternative long divider configuration, where the rib is on the same side of the long divider as the short dividers.

### BEST MODE FOR CARRYING OUT THE INVENTION

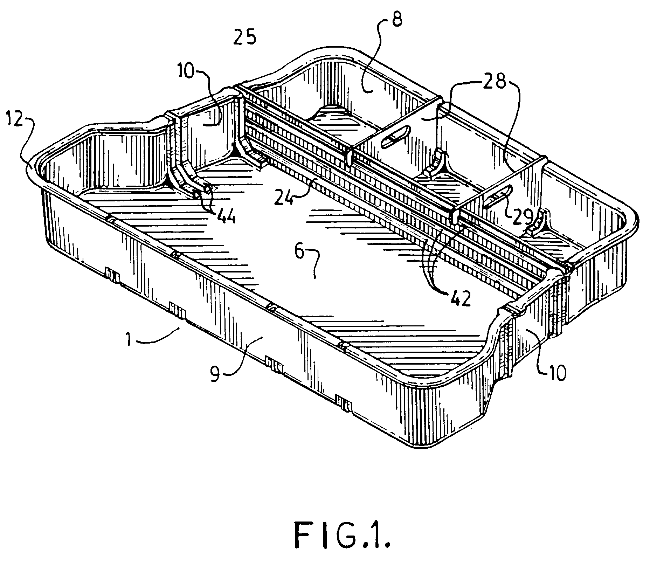

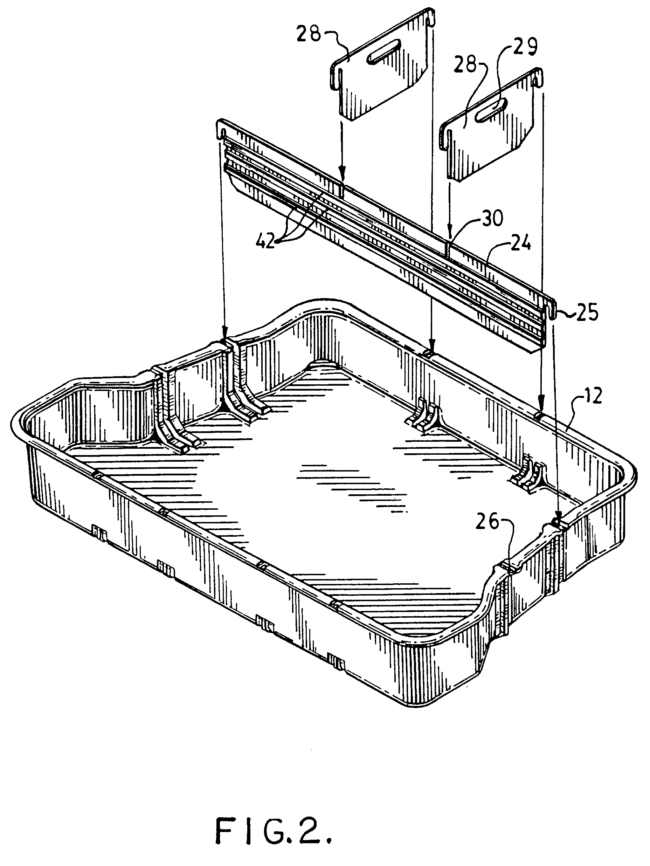

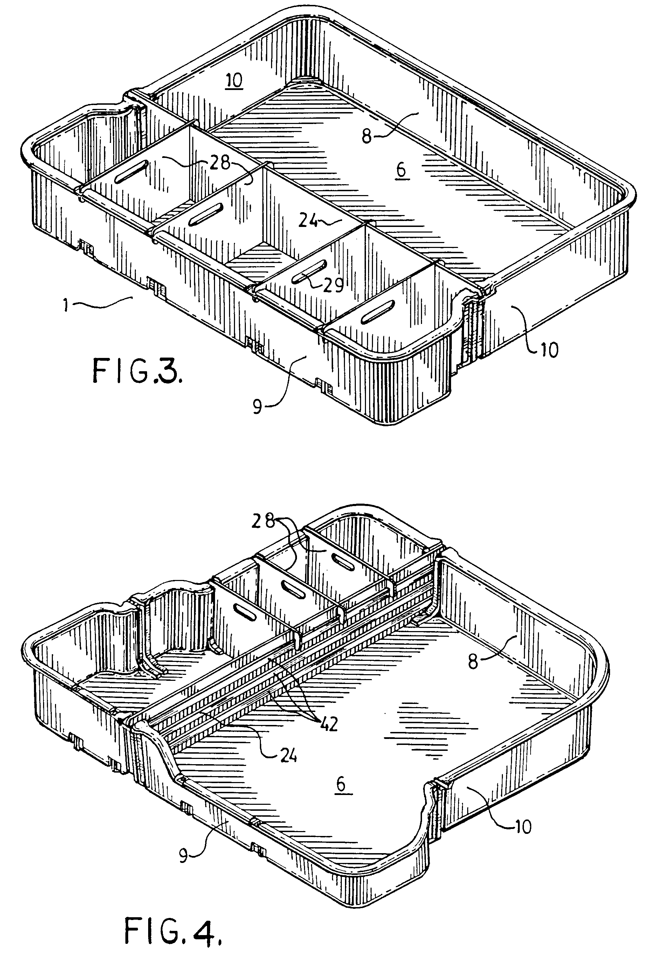

Referring now to the drawings, Figs. 1 and 2 show a preferred embodiment of the liner **1**, with a long divider **24** and short dividers **28**. Figs. 2-5 show variations in the configuration of the dividers.

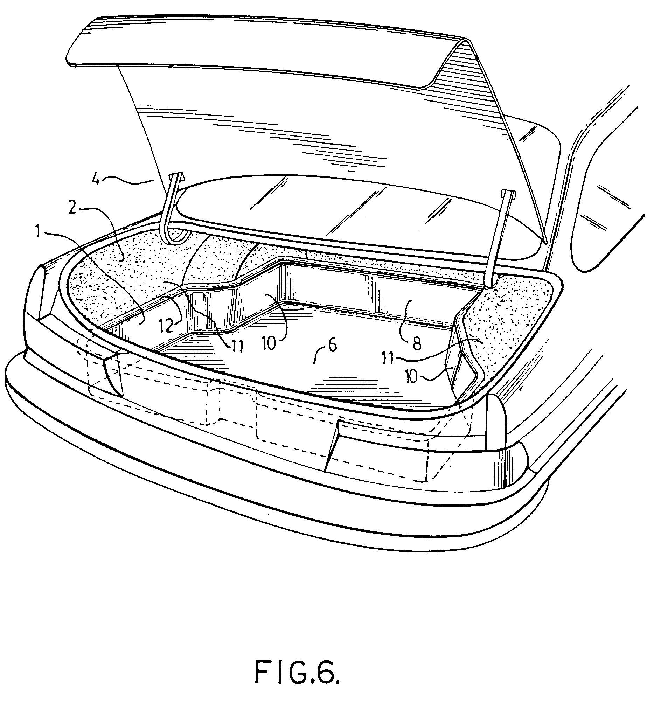

Figs. 6-8 show a liner installed in the trunk **2** of an automobile **4**. The liner has a bottom **6** conforming generally to the shape of the floor **7** of the trunk, and integral front, rear and side walls **8**, **9** and **10** respectively. The front, rear and side walls conform generally to the shape of the trunk. In many cases, this means that the side walls narrow in, as seen in Fig. 6, for example, since trunks in most automobiles are narrower at the front, i.e. towards the front of the vehicle, due to the need for clearance space for the wheels.

The liner preferably is moulded in one piece for strength and water tightness, i.e. so that it will contain spills. The average wall thickness of the finished product is preferably in the range of anywhere from 1.5 mm to 7.5 mm, depending on the size of liner being formed. The liner may be moulded from any number of structural thermoplastic or thermoset materials or rubberized thermoplastic or combinations thereof (e.g. acrylic/FRP). These synthetic polymers or copolymers are of high molecular weight, thereby producing a rigid moulded structure. For example, thermoplastics such as ABS, polyethylene, acrylic, polycarbonate, polyvinyl chloride, polystyrene, or polypropylene could be used, in a mono or multi layer composition. In the category of thermosetting plastics, FRP (fibreglass reinforced polyester) could be used. Preferably, all corners have liberal radii, so that stress points are reduced and cleaning is facilitated.

Preferably, the liner is provided with a curled lip **12** on the top edges thereof, for improved structural integrity and ease of handling.

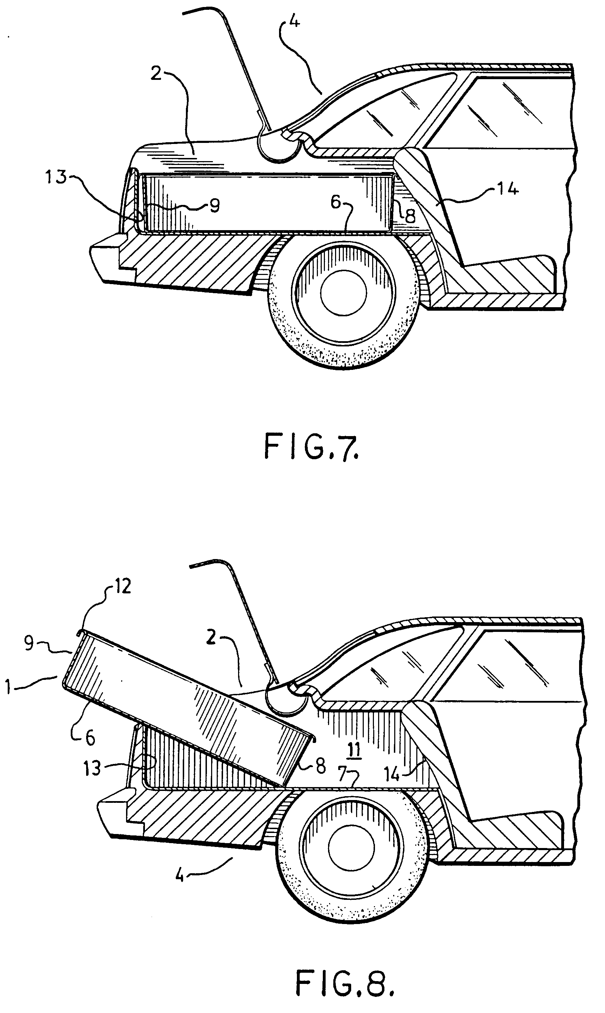

The front, rear and side walls of the liner, although generally conforming to the shape of the luggage compartment, do not necessarily contact all walls of the luggage compartment. Preferably, however, the liner walls do interact with at least two opposite luggage compartment walls or portions thereof, to form a compression fit of the liner, which prevents sliding of the liner when the vehicle is in motion. The portion of the liner in compression contact with the luggage compartment will most likely be the curled lip **12** on the upper edge, but not necessarily. The compression should be such that installation and removal of the liner can still be performed with ease, i.e. there should not be too much compression. As illustrated in Fig. 7, the compression could be front to rear, i.e. the liner could be pinched between the rear wall **13** of the trunk and the back of the seat **14**. Alternatively, the compression could be from side to side, over part or all of the side walls **11**.

It should be clearly understood that not all walls of the liner need to conform to the shape of the luggage compartment, although that may be preferable. For example, in the case of a station wagon or mini-van, there may be no rear luggage compartment wall as such, although of course a "wall" of sorts is formed when the rear hatch or gate is closed. The liner may be sized such that closing the hatch or gate in such a situation brings it into contact with the liner, to thus secure its position, or it may be that the liner in such a situation relies primarily on side-to-side pinching to prevent it from sliding around.

The length, width and height of the liner should be optimized so that the largest percentage of the luggage compartment is lined, and yet the liner may still be removed easily from the luggage compartment. In the case of luggage compartments where the luggage compartment opening is smaller than the dimensions of the overall luggage compartment space, it may be necessary to limit the width of the liner to the width of the luggage compartment opening. In such a case, front to back compression may be required to keep the liner in place. That is, in some vehicles the luggage compartment opening is not as wide as the luggage compartment area itself.

As can be appreciated from an examination of Fig. 8, the height of the liner may have to be kept to a maximum limit, since it may not be possible to fit a high-sided liner in and out of certain luggage compartments. High sides are not essential in any event, since they increase the cost of the liner without necessarily improving performance.

The front, rear and side walls of the liner taper preferably inwardly from top to bottom for ease of moulding. A taper of two degrees or more is preferred, so that an adequate draft in the mould is provided to facilitate removal of the liner from the mould. Such a taper also makes the product easier for nesting for shipping.

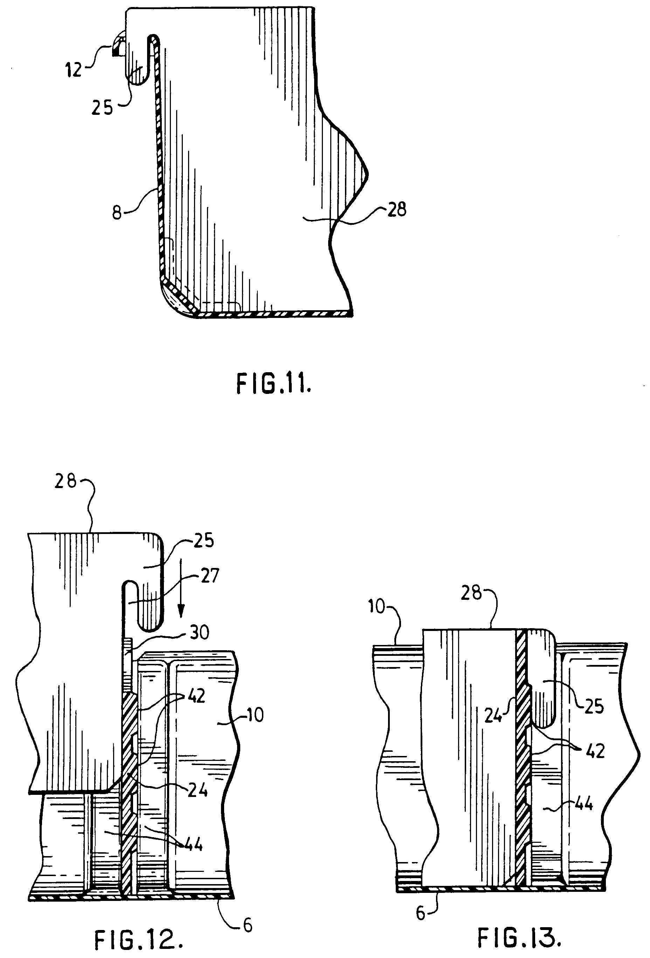

A primary advantage of the liner is compartmentalization, which is useful from a storage and organizational perspective, and may be achieved in a variety of configurations. In the preferred embodiment, removable partitions or dividers are inserted to provide compartments. Thus as seen in the drawings, one or more long lateral dividers **24** are provided, these lateral dividers having hook portions **25** which fit into holes **26** in the curled lip **12** (see Fig. 11). One or more short dividers **28** have vertical slots **27** defining hook portions **25** which hook into corresponding slots **30** in the lateral divider and additional holes **26** in the curled lip at the front and/or rear of the liner. The long and/or short dividers may be provided with optional hand grip cutout slots **29**. Preferably, the hook portion extends downwardly far enough to overlie at least one of the ribs **42** (described below), with the long divider and rib being accommodated in the slot **27** in a friction fit.

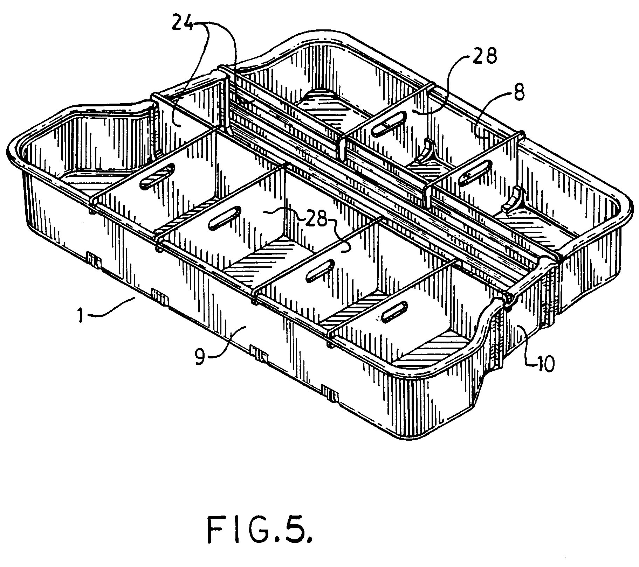

As can be readily appreciated from Figs. 1-5, this provides a wide variety of configuration options, the configurations of course not being limited to those shown specifically in Figs. 1-5. Figs. 1 and 2 show the front of the liner being divided, Fig. 3 shows the back being divided, Fig. 4 shows one side being divided, and Fig. 5 shows both the front and back being divided.

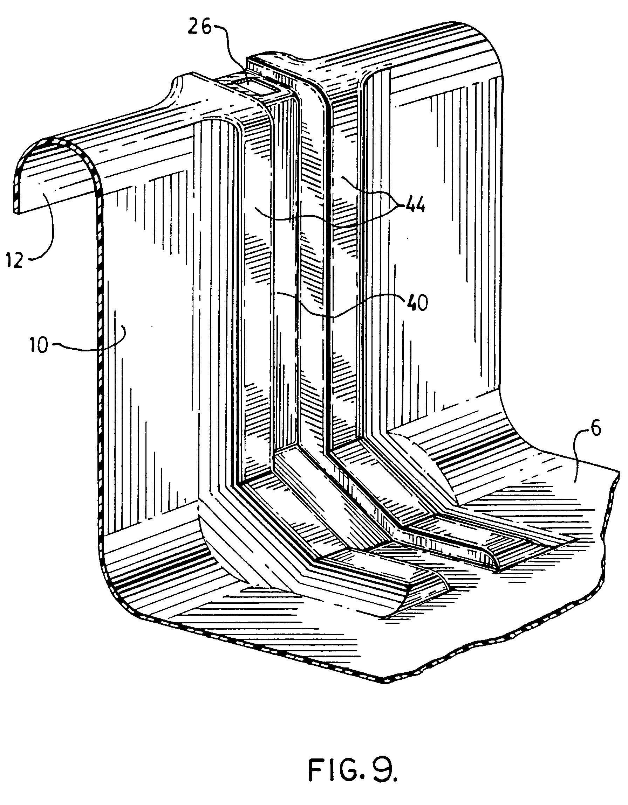

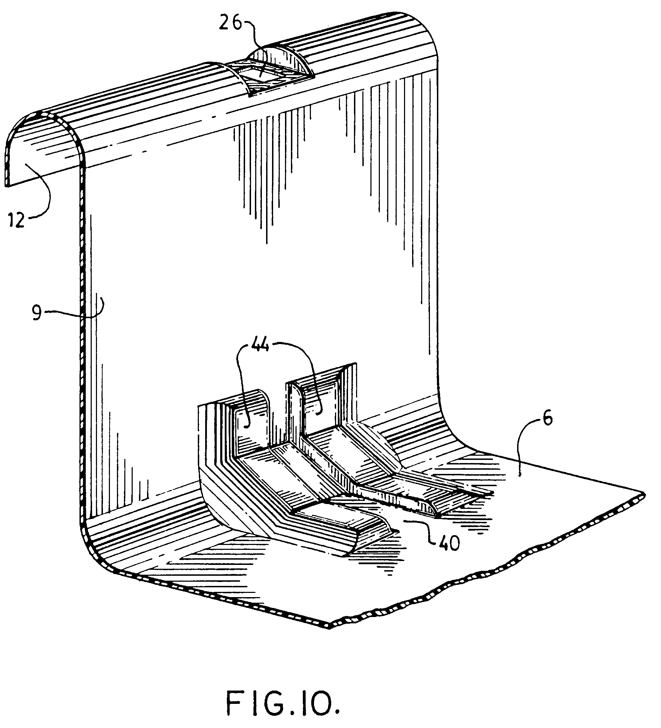

As the preferred means of securing the divider, the liner wall is provided with a groove **40** into which the divider fits, as shown in Fig. 9. This prevents the divider from bowing out at the bottom. The groove is provided by moulding the wall to form inwardly-directed projections **44**, either over the whole groove area as shown in Fig. 9, or only near the bottom of the liner, as shown in Fig. 10. The Fig. 9 arrangement is preferred for use at either end of the long divider **24**; the Fig. 10 arrangement is preferred for use at the wall end of the short dividers **28**.

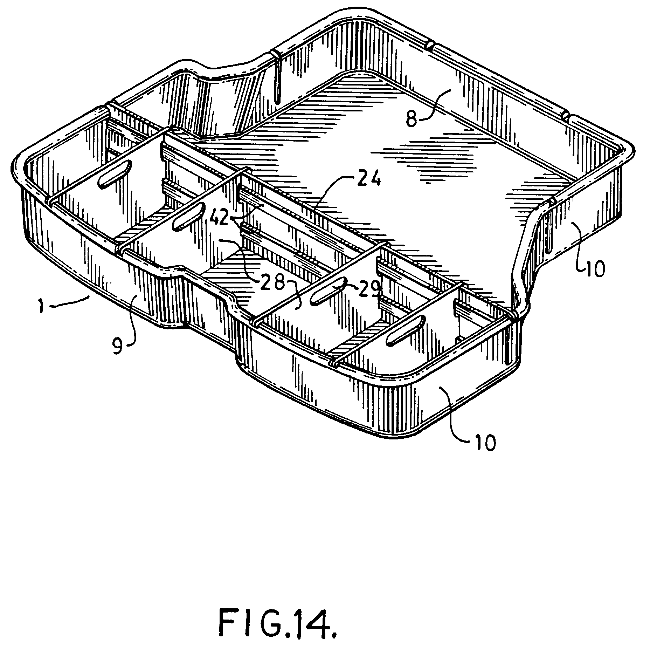

The dividers, especially the long dividers, instead of being plain sheets, preferably have a structured cross-section for greater rigidity. This rigidity is important, since the dividers must withstand forces attributable to acceleration and deceleration of the vehicle, especially when the liner is carrying objects. As one means of providing the necessary reinforcement, the long divider preferably is provided with one or more horizontal ribs **42**. In the original conception of the invention, it was contemplated to have the ribs on the same side of the long divider as the short divider(s), with slots (not visible in the drawings) provided in the ribs **42** to accommodate and support the short dividers, as shown in Fig. 14.

However, it has now been realized that it is preferable to locate the ribs **42** or other reinforcement means on the other side of the long divider. It was previously thought that means such as the slots in the ribs were essential to support the short dividers, but in fact it has been discovered that the short dividers can be made sufficiently rigid, by selecting plastic of sufficient thickness, that the projections **44** at the other end of the short dividers are sufficient to support them. This permits the ribs **42** to be located on the other side of the long divider, thus avoiding the additional labour required to form the slots, and thereby reducing the cost of the liner.

In the preferred embodiment, the short dividers are therefore preferably about 5 mm in thickness, in order to be sufficiently rigid. Lesser thicknesses may be used, which may reduce the cost of the liner slightly, but obviously this will produce a less satisfactory product in terms of quality.

As mentioned earlier, the short dividers preferably engage the long divider and at least one rib in a friction fit. This is illustrated in Figs. 12 and 13. The uppermost rib **42** is securely positioned in the slot **27**.

The liner may be manufactured using any number of structural thermoplastic or thermoset moulding techniques. For example, the following thermoplastic techniques using heat and/or pressure could be used: thermoforming, i.e. vacuum forming using male or female moulds; injection moulding, i.e. resin heated and forced with pressure into the mould; blow moulding, i.e. an extruded tube blown with air pressure against the mould cavity to form two liners at once; or rotational moulding, in which the thermoplastic powder is fused in the mould by heat and rotation. For thermoset materials, hand lay-up, spray-up or compression moulding could be used.

### INDUSTRIAL APPLICABILITY

The invention provides a convenient and practical liner for the luggage compartment of a vehicle.

## Claims

1. A plastic liner (1) for a vehicle luggage compartment (2), said compartment having generally a floor (7), a front wall (14), at least two side walls (11), and a rear wall (13), and said plastic liner having a bottom (6) conforming generally to the shape of said floor, and integral rear (9), side (10) and front walls (8), at least a portion of at least two opposing walls of said liner generally conforming to corresponding portions of said luggage compartment walls,
characterized by said liner having at least one removable long divider (24) adapted to be positioned across said liner with opposite ends engaging opposite liner walls, said long divider having reinforcement means (42) running longitudinally therealong for greater rigidity and strength.

2. A liner as recited in claim 1, where said reinforcement means comprises at least one continuous rib (42) from a point adjacent one end of said long divider to a point adjacent the other end of said long divider.

3. A liner as recited in claim 2, where there are three said ribs (42), generally evenly spaced from top to bottom of said long divider (24).

4. A liner as recited in Claim 2, further characterized by at least one removable short divider (28), each said short divider being adapted to be positionable between a wall of said liner and one said long divider, each rib (42) on said long divider being on the side of said long divider opposite said at least one short divider.

5. A liner as recited in claim 4, where there are three said ribs (42), generally evenly spaced from top to bottom of said long divider (24).

6. A liner as recited in claim 4, where each said short divider (28) has a vertical slot (27) at one end thereof defining a hook portion (25) adapted to hook over said long divider (24), said hook portion extending downwardly far enough to overlie at least one of said ribs (42), said long divider and rib being accommodated in said slot in a friction fit.

7. A liner as recited in claim 5, where each said short divider (28) has a vertical slot (27) at one end thereof defining a hook portion (25) adapted to hook over said long divider (24), said hook portion extending downwardly far enough to overlie at least one of said ribs (42), said long divider and rib being accommodated in said slot in a friction fit.

8. A liner as recited in claim 4, where each said short divider is approximately 5 mm in thickness.

9. A liner as recited in claim 5, where each said short divider is approximately 5 mm in thickness.

10. A liner as recited in claim 6, where each said short divider is approximately 5 mm in thickness.

11. A liner as recited in claim 7, where each said short divider is approximately 5 mm in thickness.

## Patentansprüche

1. Eine Plastik-Auskleidung (1) bzw. -Fütterung für Kofferräume (2) von PKWs, wobei der jeweilige Kofferraum im, allgemeinen von einem Boden (7), einer Vorderwand (14), mindestens zwei Seitenwänden (11) und einer Rückenwand (13) begrenzt ist; und wobei die vorerwähnte Plastik-Auskleidung einen Boden (6) aufweist, welcher sich der allgemeinen Kontur des Kofferraumbodens anfügt; und die Auskleidung weiterhin mit einer integralen Rückenwand (9), Seitenwänden (10) und vorderwand (8) ausgestattet ist, wovon zumindest zwei gegenüberliegende Wände jener Auskleidung sich wenigstens teilweise den Konturen des erwähnten Kofferraumes anfügen; dadurch gekennzeichnet, daß die Auskleidung mindestens einen langen, abnehmbaren Raumteiler (24) bzw. Trennstück aufweist, welcher geeignet ist, um quer auf der erwähnten Auskleidung plaziert zu werden und dabei die sich gegenüberliegenden Wände der Auskleidung abstützt; und womit der lange Raumteiler durch eine Versteifung (42) längsachsig erhöhte Stabilität und Festigkeit gewährt.

2. Eine Auskleidung gemäß Anspruch 1, womit vorerwähnte Versteifung aus mindestens einer durchgehenden Rippe (42) besteht, welche sich von einem etwaigen Ende des langen Raumteilers zum anderen erstreckt.

3. Eine Auskleidung gemäß Anspruch 2, mit drei vorerwähnten Rippen, in allgemein gleichmäßigem Abstand übereinanderliegend angeordnet, und dabei der Höhe des langen Raumteilers (24) entsprechend.

4. Eine Auskleidug gemäß Anspruch 2, weiterhin gekennzeichnet durch wenigstens einen abnehmbaren kurzen Raumteiler (28) bzw. Trennstück, wobei sich jeder der solchen dazu eignet, um zwischen einer Wand der erwähnten Auskleidung und eines langen Raumteilers plaziert zu werden, wobei jede Rippe (42) des langen Raumteilers auf der gegenüberliegenden Seite von wenigstens einen der kurzen Raumaufteiler (28) liegt.

5. Eine Auskleidung gemäß Anspruch 4, mit drei in gleichmäßigem Abstand angeordneten und übereinander liegenden Rippen (42), entsprechend der Höhe des langen Raumteilers (24).

6. Eine Auskleidung gemäß Anspruch 4, wobei jeder der vorerwähnten kurzen Raumaufteiler (28) an einem Ende mit einen senkrechten Schlitz (27) versehen ist, dargestellt durch einen Einhakungsteil (25) um den langen Raumaufteiler (24) zu überhaken; indem die erwähnte Einhakung genügend weit nach unten reicht, um zumindest eine der erwähnten Rippen (42) zu überlagern bzw. zu übergreifen, und damit den langen Raumaufteiler und die Rippen in kraftschlüssiger Verbindung im vorerwähnten Schlitz zu verankern.

7. Eine Auskleidung gemäß Anspruch 5, wobei jeder der vorerwähnten kurzen Raumaufteiler (28) an einem Ende mit einen senkrechten Schlitz (27) versehen ist, dargestellt durch einen Einhakungsteil (25) um den langen Raumaufteiler (24) zu überhaken; indem die erwähnte Einhakung genügend weit nach unten reicht, um zumindest eine der erwähnten Rippen (42) zu überlagern bzw. zu übergreifen, und damit den langen Raumaufteiler und die Rippen in kraftschlüssiger Verbindung im vorerwähnten Schlitz zu verankern.

8. Eine Auskleidung gemäß Anspruch 4, wobei jeder der vorerwähnten kurzen Raumaufteiler eine Dicke von etwa 5 mm hat.

9. Eine Auskleidung gemäß Anspruch 5, wobei jeder der vorerwähnten kurzen Raumaufteiler eine Dicke von etwa 5 mm hat.

10. Eine Auskleidung gemäß Anspruch 6, wobei jeder der vorerwähnten kurzen Raumaufteiler eine Dicke von etwa 5 mm hat.

11. Eine Auskleidung gemäß Anspruch 7, wobei jeder der vorerwähnten kurzen Raumaufteiler eine Dicke von etwa 5 mm hat.

## Revendications

1. Une chemise (1) en matière plastique pour le compartiment des bagages (2) dans un véhicule, ce compartiment ayant généralement un fond (7), une paroi avant (14), au moins deux parois latérales (11), et une paroi arrière (13), et la dite chemise en matière plastique ayant généralement un fond (6) qui épouse la forme du dit fond du compartiment des bagages, une parois arrière (9) intégrale avec lui, des parois latérales (10 et une paroi avant (8), une portion au moins d'au moins deux parois opposées de la dite chemise épousant généralement la forme des portions correspondantes des parois du dit compartiment, caractérisée en ce que la chemise est pourvue d'au moins une longue cloison de séparation (24) amovible, adaptée pour être placée au travers de la dite chemise, ses extrémités opposées s'engageant dans les parois opposées de la chemise, cette longue cloison de séparation étant pourvue de moyens de renforcement (43) dans le sens de sa longueur, qui assurent une plus grande rigidité et une plus grande résistance.

2. Une chemise selon la revendication 1, dans laquelle les moyens de renforcement comprennent au moins une nervure continue (42), allant d'un point adjacent à une extrémité de cette longue cloison de séparation jusqu'à un point à l'autre extrémité de cette même cloison.

3. Une chemise selon la revendication 2, munie de trois des dites nervures (42), espacées également les unes des autres, allant du haut au bas de la dite longue cloison de séparation (24).

4. Une chemise selon la revendication 2, encore caractérisée en ce qu'elle a au moins une courte cloison de séparation (28), chacune des dites courtes cloisons de séparation étant telle qu'elle peut être positionnée entre une paroi de la dite chemise et l'une des dites longues cloisons de séparation, chaque nervure (42) de la longue cloison qui se trouve du côté de cette cloison faisant face à au moins une courte cloison de séparation.

5. Une chemise selon la revendication 4, dans laquelle se trouvent trois des dites nervures (42), généralement espacées également les unes des autres, allant du haut au bas de la dite longue cloison de séparation.

6. Une chemise suivant la revendication 4, dans laquelle la dite courte cloison de séparation (28) est munie d'une fente verticale (27) qui définit, à son extrémité une partie en forme de crochet (25), capable de venir s'accrocher sur le haut de la longue cloison de séparation (24), cette portion en forme de crochet s'étendant assez loin vers le bas pour recouvrir au moins l'une des nervures (42), la dite longue cloison de séparation et la nervure venant se placer dans la dite fente par emboîtage à friction.

7. Une chemise selon la revendication 5, dans laquelle la dite courte cloison de séparation (28) est munie d'une fente verticale (27) qui définit, à son extrémité une partie ne forme de crochet (25), capable de venir s'accrocher sur le haut de la longue cloison de séparation (24), cette portion en forme de crochet s'étendant assez loin vers le bas pour recouvrir au moins l'une des nervures (42), la dite longue cloison de séparation et la nervure venant se placer dans la dite fente par emboîtage à friction.

8. Une chemise selon la revendication 4, dans laquelle l'épaisseur de chacune des courtes cloisons de séparation est d'environ 5 mm.

9. U e chemise selon la revendication 5, dans laquelle l'épaisseur de chacune des dites courtes cloisons de séparation est d'environ 5 mm.

10. Une chemise selon la revendication 6, dans laquelle l'épaisseur de chacune des dites courtes cloisons de séparation est d'environ 5 mm.

11. Une chemise selon la revendication 7, dans laquelle l'épaisseur de chacune des dites courtes cloisons de séparation est d'environ 5 mm.
